# EUROPÄISCHE PATENTSCHRIFT

(11) **EP 2 371 191 B1**
(45) Veröffentlichungstag und Bekanntmachung des Hinweises auf die Patenterteilung: **07.05.2014**
(21) Anmeldenummer: 11002604.4
(22) Anmeldetag: 30.03.2011
(51) Int. Cl.: A01B 49/02, A01B 33/08

(54) **An einen Traktor angebautes oder angehängtes Bodenbearbeitungsgerät**
Soil cultivation device attached to or trailing behind a tractor
Appareil de travail du sol monté sur un tracteur ou accroché à celui-ci

(30) Priorität: 30.03.2010 DE 102010013406
(43) Veröffentlichungstag der Anmeldung: 05.10.2011
(73) Patentinhaber: Lemken GmbH & Co. KG, 46519 Alpen (DE)
(72) Erfinder: Gebbeken, Martin, 46519 Alpen (DE); Werries, Dieter, 46519 Alpen (DE); Peassens, Christian, 47665 Issum (DE); Lukas, Thomas, 48683 Ahaus Wülfen (DE); Geraats, Marcel, 41334 Nettetal (DE); Berendsen, Mark, 7044 AJ Lengel (NL)
(74) Vertreter: Schulte & Schulte

(56) Entgegenhaltungen:
- WO-A1-92/01363
- DE-A1- 10 010 819
- DE-C- 834 045
- FR-A1- 2 183 571

## Beschreibung

Die Erfindung betrifft ein an einen Traktor angebautes oder angehängtes Bodenbearbeitungsgerät gemäß dem Oberbegriff des Patentanspruches 1.

Aus der FR 2 183 571 ist ein Bodenbearbeitungsgerät mit rotierbaren Werkzeugen bekannt, die durch oberhalb positionierte Motoren angetrieben werden. Vergleichbar ist die DE-PS 834 045 mit Elektromotoren, welche die Pflugscheiben antreiben, die mittels Werkzeugträgern so an dem Pflugrahmen angeordnet sind, dass die Pflugscheiben in beliebige Arbeitsstellungen gebracht werden können. Die WO 92/01363 zeigt ein Bodenbearbeitungsgerät mit einer Mehrzahl von rotierenden Werkzeugen, zu deren Antrieb an den äußeren Enden des Rahmen positionierte Motoren dienen. Ein Bodenbearbeitungsgerät gemäß Oberbegriff ist außerdem mittelbar der deutschen Offenlegungsschrift DE 100 10 819 A1 zu entnehmen. Der Gegenstand dieser Patentanmeldung ist ein Traktor mit eigener Bordelektronik, Bordcomputer und Stromsteckdose, bei dem die an der Stromsteckdose anstehende Spannung so geregelt werden kann, dass bei einem angetriebenen Bodenbearbeitungsgerät die Bodenbearbeitungswerkzeuge über einen Elektromotor anstatt über die Zapfwelle des Traktors, über eine Gelenkwelle und über ein geräteseitiges Getriebe angetrieben werden können. Diese Patentanmeldung lehrt, dass für den Antrieb der Bodenbearbeitungswerkzeuge des Bodenbearbeitungsgerätes kein aufwendiger Antriebsstrang mit Gelenkwellen benötigt wird. Vielmehr können bei diesem Bodenbearbeitungsgerät eine Kreiselegge und die Bodenbearbeitungswerkzeuge über einen Elektromotor angetrieben werden.
Bei einer Kreiselegge, wie in diesem Fall, die mit dem vorgeschlagenen Traktor eingesetzt werden kann, wird ein Werkzeugkreisel mit Bodenbearbeitungswerkzeugen vom Elektromotor angetrieben und das Antriebsmoment über Zahnräder auch auf die jeweils benachbarten Zahnräder und Werkzeugkreisel übertragen. Nachteilig ist hier, dass die Zahnräder sehr stabil ausgelegt werden müssen, da sie das Antriebsmoment für mehrere Werkzeugkreisel übertragen müssen. Bei einer 4 m breiten Kreiselegge muss das erste Zahnrad im Antriebsstrang fast die 9-fache Stabilität aufweisen wie eigentlich erforderlich.

Aufgabe der Erfindung ist es, ein Bodenbearbeitungsgerät zu schaffen, bei dem keine Überdimensionierung von Bauteilen wie Zahnräder und Werkzeuge erforderlich wird, bei dem der Arbeitseffekt individuell einstellbar ist, bei dem der Leistungsbedarf äußerst gering ist.

Die Aufgabe der Erfindung wird durch die Merkmale des kennzeichnenden Teils des Patentanspruches 1 gelöst.

Dadurch, dass die Bodenbearbeitungswerkzeuge über separate Elektromotoren angetrieben werden, kann auf den üblichen Antriebsstrang, der normalerweise aus Gelenkwellen, Zahnrädern, Riemen- und Kettentrieben besteht, verzichtet werden. Somit braucht jedes Bodenbearbeitungsgerät mit Elektromotor nur für die individuellen Belastungen ausgelegt zu sein.

Erfindungsgemäß ist weiter vorgesehen, dass die einzelnen angetriebenen Bodenbearbeitungswerkzeuge den Boden in Arbeitsrichtung streifenweise bearbeiten und die bearbeiteten Streifen als Saatbeetstreifen ausgebildet sind, wobei der Bereich zwischen den Saatbettstreifen unbearbeitet bleibt oder weniger intensiv bearbeitet wird. Durch die streifenweise Bearbeitung des Bodens, wird der Boden nur dort bearbeitet, wo auch Saatgut abgelegt werden soll. Zwischen den Streifen bzw. den Saatbettstreifen bleibt der Boden unbearbeitet oder wird weniger intensiv bearbeitet. Diese streifenweise Bearbeitung des Bodens ist zwar bekannt, kann aber durch den individuellen Einsatz von einem Elektromotor je Bodenbearbeitungswerkzeug flexibler gestaltet und auch optimaler genutzt werden. So wird insgesamt weniger Antriebsenergie benötigt. Außerdem werden Verschleißteilkosten gespart, da die Anzahl der eingesetzten Bodenbearbeitungswerkzeuge auf ein Minimum reduziert wird. Auch auf die jeweils vorhandenen Erosionsproblematiken kann das so angetriebene Bodenbearbeitungsgerät besser eingestellt werden.

Die Erfindung sieht weiter vor, dass dem Bodenbearbeitungsgerät eine Drillmaschine zugeordnet ist, deren Säschare im Bereich der Saatbettstreifen angeordnet sind. Vorteilhaft kann so in einer Überfahrt der Boden bearbeitet und auch gleichzeitig Saatgut ausgebracht werden.

Zudem ist daran gedacht, dass dem Bodenbearbeitungsgerät mit Drillmaschine auch ein Düngegerät zugeordnet ist, dessen Düngeschare im Bereich der Saatbettstreifen angeordnet sind. In einer optimierten Ausführung wird parallel zu der Bodenbearbeitung und dem Ausbringen von Saatgut auch Dünger ausgebracht.

Gemäß einer weiteren Ausführungsform ist vorgesehen, dass die Düngeschare seitlich und/oder versetzt zu den Säreihen der Drillmaschine angeordnet sind. Denkbar ist bei guter Verträglichkeit des Düngers mit dem Saatgut eine Anordnung der Säschare und Düngeschare jeweils in einer Saatreihe. Der Dünger wird ansonsten ggf. seitlich der abgelegten Saatreihe ausgebracht oder auch darunter. Je nach Verträglichkeit des Düngers mit dem Saatgut geschieht dies mit einem geringeren oder einem größeren Abstand.

In Hinblick auf den Antrieb ist daran gedacht, dass die Stromversorgung der Elektromotoren über einen Generator erfolgt, der vorzugsweise dem Traktor oder dem Bodenbearbeitungsgerät zugeordnet ist. Der Generator kann so direkt vom Traktormotor angetrieben werden oder aber auch Bestandteil eines Bodenbearbeitungsgerätes mit einer Gelenkwelle sein, die die Antriebsleistung des Traktors auf den Generator überträgt.

Nach einer weiteren Variante ist beabsichtigt, dass zwischen dem Generator und den Elektromotoren mindestens ein Antriebsregler zwischengeschaltet ist und dass über eine Steuerung die Motordrehzahl so geregelt wird, dass die Drehzahl der angetriebenen Bodenbearbeitungswerkzeuge den eingestellten, programmierten oder den über ein digitales Bestimmungssystem der Position, z.B. ein GPS Empfänger, empfangenen Vorgaben entspricht. Abhängig von diesen Vorgaben wird so die Drehzahl der angetriebenen Bodenbearbeitungswerkzeuge erhöht oder reduziert, so wie es die vorliegenden Gegebenheiten erfordert. Diese Vorgaben können von einer Flächenvorgabe stammen, sie können auch einprogrammiert sein oder einfach manuell umgesetzt werden.

Es wird außerdem eine Vorrichtung vorgeschlagen, die die Struktur des bearbeiteten Bodens erfasst und über die Steuerung die Arbeitsintensität der angetriebenen Bodenbearbeitungswerkzeuge so eingestellt wird, dass die gewünschte Struktur des Bodens bzw. der Saatbettstreifen erreicht wird. Über Kamerasysteme mit entsprechenden Auswertungsprogrammen oder Sensoren, kann so ermittelt werden, ob der Boden zu intensiv oder unzureichend bearbeitet wird. Die Drehzahl der angetriebenen Bodenbearbeitungswerkzeuge kann dann so verändert werden, dass die gewünschte Krümelstruktur erzielt wird. Im Bedarfsfall kann auch die Umkehr der Drehrichtung der Bodenbearbeitungswerkzeuge dazu genutzt werden, um die gewünschte Bodenstruktur zu erreichen.

Es ist gemäß der Erfindung weiter vorgesehen, dass der jeweilige Elektromotor als Servomotor, Synchronmotor oder Asynchronmotor ausgebildet ist, der hinsichtlich der Drehrichtung reversierbar ist und vorzugsweise mit einer Spannung zwischen 380 Volt und 750 Volt versorgt wird. Um einen möglichst effizienten Wirkungsgrad zu erreichen, empfiehlt sich eine Spannung zwischen 380 Volt und 750 Volt, wobei auch höhere Spannungen denkbar sind. Sinnvoll ist es allerdings, den zuvor genannten Spannungsbereich zu nutzen, da diese Technik bereits bei stationären Maschinen gut bewährt eingesetzt wird.

Die Erfindung sieht weiter vor, dass der jeweilige Elektromotor mit einem Freilauf und/oder einer Reversiereinrichtung ausgestattet ist, die bei Erreichen eines vorgegebenen Grenzdrehmomentes oder einer entsprechend hohen Stromaufnahme des zugehörigen Elektromotors aktivierbar ausgebildet sind. Sollten die angetriebenen Bodenbearbeitungswerkzeuge auf ein Hindernis stoßen, kann so zum Schutz vor Beschädigungen des Gerätes, der Bodenbearbeitungswerkzeuge oder des Elektromotors der Antrieb abgeschaltet werden. Umgekehrt kann so zum Beispiel auch durch kurzzeitige Drehrichtungsumkehr der angetriebenen Bodenbearbeitungswerkzeuge ein bereits dazwischen eingeklemmter Stein wieder frei gegeben werden.

Zwischen dem jeweiligen Elektromotor und der Antriebswelle eines angetriebenen Bodenbearbeitungswerkzeugs ist zudem ein Untersetzungsgetriebe oder Übersetzungsgetriebe vorgesehen. Zum einen können so Elektromotoren eingesetzt werden, die zum Beispiel mit einer hohen Drehzahl arbeiten und entsprechend leicht ausgebildet sein können, zum anderen kann die Drehzahl der angetriebenen Bodenbearbeitungswerkzeuge gering gehalten werden, was zu Energieeinsparungen führt, wenn die Bodenverhältnisse eine derartig geringe Drehzahl der angetriebenen Bodenbearbeitungswerkzeuge vorteilhaft zulassen.

Die Erfindung sieht weiter vor, dass die einzelnen angetriebenen Bodenbearbeitungswerkzeuge mit Elektromotor verschiebbar, versetzbar oder verschwenkbar am Rahmen angeordnet sind. Diese Ausführungsform gewährleistet, dass der Boden jeweils optimal bearbeitet werden kann. Üblicherweise hinterlässt der Traktor Fahrspuren, die eine intensivere oder zumindest eine andere Bearbeitung des befahrenen Bodens erfordern. Je nach vorhandener Fahrspur können so die einzelnen angetriebenen Bodenbearbeitungswerkzeuge in eine Position gebracht werden, die für eine optimale Lockerung bzw. Egalisierung der Fahrspur ackerbaulich am günstigsten ist. Wenn größere oder geringere Säreihenabstände erforderlich sind, können die angetriebenen Bodenbearbeitungswerkzeuge jeweils in die dafür optimale Position gebracht werden.

Die einzeln oder paarweise angetriebenen Bodenbearbeitungswerkzeuge sind außerdem so am Rahmen angeordnet, dass der Boden ganzflächig bearbeitet wird. Werden die einzelnen angetriebenen Bodenbearbeitungswerkzeuge so angeordnet, dass ihr Arbeitsbereich überlappt, kann der Boden konventionell ganzflächig bearbeitet werden. Der Boden kann dabei aber den Anforderungen entsprechend mehr oder weniger intensiv bearbeitet werden, z.B. dort wo Bodenverdichtungen vorherrschen, etwas intensiver.

Weitere Einzelheiten und Vorteile des Erfindungsgegenstandes ergeben sich aus der nachfolgenden Beschreibung und der zugehörigen Zeichnung. Dargestellt ist eine Kreiselegge als Bodenbearbeitungsgerät mit in dieser Ausführungsform separat angetriebenen Bodenbearbeitungswerkzeugen.

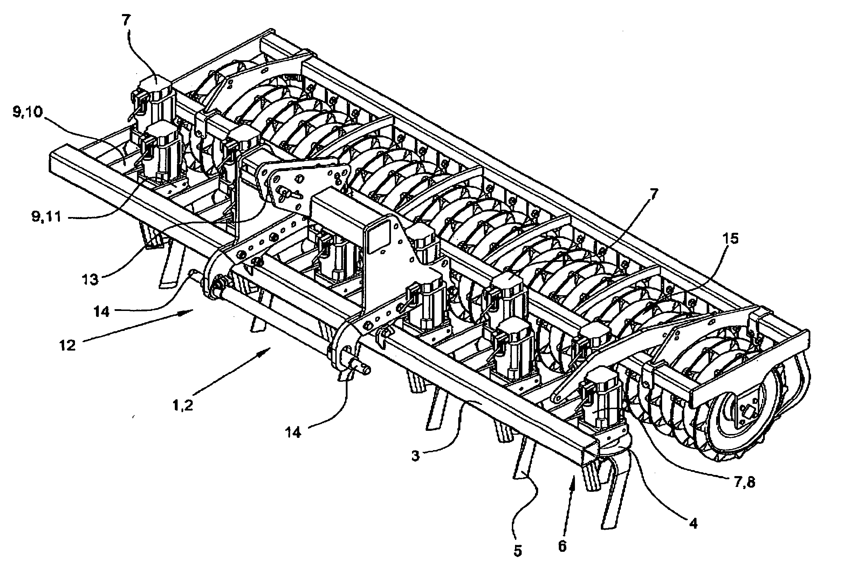

Die Figur zeigt eine Kreiselegge 2 als Bodenbearbeitungsgerät 1, die einen Rahmen 3 aufweist, an dem die angetriebenen Bodenbearbeitungswerkzeuge 4 in Form von Zinken 5 nebeneinander und hintereinander versetzt angeordnet sind. Diese Anordnung der angetriebenen Bodenbearbeitungswerkzeuge 4 gilt insbesondere für eine ganzflächige Bodenbearbeitung. Für die Herstellung von Saatbettstreifen werden nur die Bodenbearbeitungswerkzeuge 4 eingesetzt, die für die Herstellung der Saatbettstreifen benötigt werden. Die Umlaufbahn der Zinken 5 entspricht dann der Breite des zu erstellenden Saatbettstreifens. Dieser Saatbettstreifen kann beispielsweise 5 cm breit sein, aber auch so breit, dass eine ganzflächige Bodenbearbeitung erzielt wird. Entsprechende Leitvorrichtungen sind dann neben und/oder oberhalb der Bodenbearbeitungswerkzeuge 4 vorzusehen, die für eine gezielte Ablage des bearbeiteten Bodens sorgen. Diese Leitvorrichtungen sorgen gezielt dafür, dass gleichmäßige und saubere Saatbettstreifen hergestellt werden. Anstelle der dargestellten angetriebenen Bodenbearbeitungswerkzeuge 4 mit Zinken 5, die um senkrecht angeordnete Antriebswellen 6 verfügen, können vorzugsweise auch Bodenbearbeitungswerkzeuge 4 vorgesehen werden, die um quer zur Arbeitsrichtung und waagerecht angeordnete Antriebswellen 6 drehbar angeordnet sind. Oberhalb der angetriebenen Bodenbearbeitungswerkzeuge 4 befinden sich die Elektromotoren 7 mit integriertem Untersetzungsgetriebe 8. Für die Befestigung der Elektromotoren 7 mit Untersetzungsgetriebe 8 am Rahmen 3 dienen die Träger 9. Die vorderen angetriebenen Bodenbearbeitungswerkzeuge 4 sind über kurze Träger 11 mit dem Rahmen 3 verbunden, die hinteren Bodenbearbeitungswerkzeuge 4 über die längeren Träger 10. Das Bodenbearbeitungsgerät 1 kann über den Dreipunktturm 12 mit dem Dreipunktturm eines Traktors verbunden werden. Dazu dienen der obere Anlenkpunkt 13 und die unteren Anlenkpunkte 14. Dem Bodenbearbeitungsgerät 1 ist auch eine höheneinstellbare Nachlaufwalze 15 nachgeordnet, die den bearbeiteten und gelockerten Boden zusätzlich bearbeitet und rückverfestigt.

## Patentansprüche

1. An einen Traktor angebautes oder angehängtes Bodenbearbeitungsgerät (1) mit einem Rahmen (3) und mit jeweils über einen separaten Elektromotor angetriebenen Bodenbearbeitungswerkzeugen (4),
**dadurch gekennzeichnet,**
**dass** die Bodenbearbeitungswerkzeuge (4) den Boden in Arbeitsrichtung streifenweise bearbeiten und die bearbeiteten Streifen als Saatbettstreifen ausgebildet sind, wobei der Bereich zwischen den Saatbettstreifen unbearbeitet bleibt oder weniger intensiv bearbeitet wird und dass dem Bodenbearbeitungsgerät (1) eine Drillmaschine zugeordnet ist, deren Säschare im Bereich der Saatbettstreifen angeordnet sind.

2. Bodenbearbeitungsgerät nach Anspruch 1,
**dadurch gekennzeichnet,**
**dass** dem Bodenbearbeitungsgerät (1) auch ein Düngegerät zugeordnet ist, dessen Düngeschare im Bereich der Saatbettstreifen angeordnet sind.

3. Bodenbearbeitungsgerät nach Anspruch 2,
**dadurch gekennzeichnet,**
**dass** die Düngeschare seitlich und/oder versetzt zu den Säreihen der Drillmaschine angeordnet sind.

4. Bodenbearbeitungsgerät nach Anspruch 1,
**dadurch gekennzeichnet,**
**dass** die Stromversorgung der Elektromotoren (7) über einen Generator erfolgt, der vorzugsweise dem Traktor oder dem Bodenbearbeitungsgerät (1) zugeordnet ist.

5. Bodenbearbeitungsgerät nach Anspruch 4,
**dadurch gekennzeichnet,**
**dass** zwischen dem Generator und den Elektromotoren (7) mindestens ein Antriebsregler zwischengeschaltet ist und dass über eine Steuerung die Motordrehzahl so geregelt wird, dass die Drehzahl der angetriebenen Bodenbearbeitungswerkzeuge (4) den eingestellten, programmierten oder den über ein digitales Bestimmungssystem der Position, z.B. ein GPS Empfänger, empfangenen Vorgaben entspricht.

6. Bodenbearbeitungsgerät nach Anspruch 1,
**dadurch gekennzeichnet,**
**dass** eine Vorrichtung vorgesehen ist, die die Struktur des bearbeiteten Bodens erfasst und über die Steuerung die Arbeitsintensität der angetriebenen Bodenbearbeitungswerkzeuge (4) so eingestellt wird, dass die gewünschte Struktur des Bodens bzw. der Saatbettstreifen erreicht wird.

7. Bodenbearbeitungsgerät nach Anspruch 1,
**dadurch gekennzeichnet,**
**dass** der jeweilige Elektromotor (7) als Servomotor, Synchronmotor oder Asynchronmotor ausgebildet ist, der hinsichtlich der Drehrichtung reversierbar ist und vorzugsweise mit einer Spannung zwischen 380 Volt und 750 Volt versorgt wird.

8. Bodenbearbeitungsgerät nach Anspruch 1,
**dadurch gekennzeichnet,**
**dass** der jeweilige Elektromotor (7) mit einem Freilauf und/oder einer Reversiereinrichtung ausgestattet ist, die bei Erreichen eines vorgegebenen Grenzdrehmomentes oder einer entsprechend hohen Stromaufnahme des zugehörigen Elektromotors (7) aktivierbar ausgebildet sind.

9. Bodenbearbeitungsgerät nach Anspruch 1,
**dadurch gekennzeichnet,**
**dass** zwischen dem jeweiligen Elektromotor (7) und der Antriebswelle (6) eines angetriebenen Bodenbearbeitungswerkzeugs (4) ein Untersetzungsgetriebe oder Übersetzungsgetriebe vorgesehen ist.

10. Bodenbearbeitungsgerät nach Anspruch 1,
**dadurch gekennzeichnet,**
**dass** die einzelnen angetriebenen Bodenbearbeitungswerkzeuge (4) mit Elektromotor (7) verschiebbar, versetzbar oder verschwenkbar am Rahmen (3) angeordnet sind.

11. Bodenbearbeitungsgerät nach Anspruch 1,
**dadurch gekennzeichnet,**
**dass** die einzelnen angetriebenen Bodenbearbeitungswerkzeuge (4) so am Rahmen (3) angeordnet sind, dass der Boden ganzflächig bearbeitet wird.

## Claims

1. Soil tillage implement (1) attached to or suspended from a tractor with a frame (3) and with soil tilling tools (4) driven in each case by a separate electromotor,
**characterised by** the fact
that the soil tilling tools (4) till the soil in strips in the direction of working and the tilled strips are formed as seedbed strips, whereby the area between the seedbed strips remains untilled or is tilled less intensively and that a drill is assigned to the soil tillage implement (1) whose sowing coulters are arranged in the area of the seedbed strips.

2. Soil tillage implement in accordance with Claim 1,
**characterised by** the fact
that a fertiliser unit whose fertiliser coulters are also arranged in the area of the seedbed strips is also assigned to the soil tillage implement (1).

3. Soil tillage implement in accordance with Claim 2,
**characterised by** the fact
that the fertiliser coulters are arranged laterally and/or offset to the seed rows of the drill.

4. Soil tillage implement in accordance with Claim 1,
**characterised by** the fact
that the power supply of the electromotors (7) is provided by a generator, which is assigned preferably to the tractor or the soil tillage implement (1).

5. Soil tillage implement in accordance with Claim 4,
**characterised by** the fact
that at least one drive controller is interconnected between the generator and the electromotors (7) and that the motor speed is controlled via a controller so that the speed of the driven soil tilling tools (4) conforms to the set or programmed speed or to the speed received by means of a digital position determination system, e.g. a GPS receiver.

6. Soil tillage implement in accordance with Claim 1,
**characterised by** the fact
that a device is provided that records the structure of the tilled ground and sets the work intensity of the driven soil tilling tools (4) via a controller so that the desired structure of the ground or of the seedbed strips is achieved.

7. Soil tillage implement in accordance with Claim 1,
**characterised by** the fact
that the respective electromotor (7) is designed as a servomotor, synchronous motor or asynchronous motor that is reversible with regard to the direction of rotation and is supplied preferably with a voltage between 380 Volt and 750 Volt.

8. Soil tillage implement in accordance with Claim 1,
**characterised by** the fact
that the respective electromotor (7) is equipped with a freewheel and/or a reversing device that is designed to be activatable when a given limit torque or a correspondingly high power consumption of the corresponding electromotor (7) is reached.

9. Soil tillage implement in accordance with Claim 1,
**characterised by** the fact
that a reduction gear or transmission gearing is planned between the respective electromotor (7) and the drive shaft (6) of a driven soil tilling tool (4).

10. Soil tillage implement in accordance with Claim 1,
**characterised by** the fact
that the individual driven soil tilling tools (4) are arranged on the frame (3) movable, displaceable or pivottable with electromotor (7).

11. Soil tillage implement in accordance with Claim 1,
**characterised by** the fact
that the individual driven soil tilling tools (4) are arranged on the frame (3) in such a way that the ground is tilled over the full working area.

## Revendications

1. Appareil de travail du sol (1) monté sur ou accroché à un tracteur avec un cadre (3) et avec à chaque fois des outils de travail du sol (4) entraînés par un moteur électrique séparé,
**caractérisé par le fait,**
**que** les outils de travail du sol (4) travaillent le sol par bandes dans le sens du travail et que les bandes ont la forme de lits de semences, sachant que la zone entre les bandes de lit de semence restent non travaillées ou sont travaillées avec moins d'intensité et qu'une semeuse, dont les socs sont ordonnés dans la zone des bandes de lits de semence, est attribuée à l'appareil de traitement du sol (1).

2. Appareil de traitement du sol selon la revendication 1,
**caractérisé par le fait,**
**qu'**un appareil d'amendement, dont le soc d'amendement est disposé dans la zone des bandes de lits de semence, est également attribué à l'appareil de traitement du sol (1).

3. Appareil de traitement du sol selon la revendication 2,
**caractérisé par le fait,**
**que** les socs d'amendement sont décalés latéralement et/ou sont disposés de façon décalée par rapport aux rangs de semence de la semeuse.

4. Appareil de traitement du sol selon la revendication 1,
**caractérisé par le fait,**
**que** l'alimentation électrique des moteurs électriques (7) a lieu via un générateur qui est attribué de préférence au tracteur ou à l'appareil de traitement du sol (1).

5. Appareil de traitement du sol selon la revendication 4,
**caractérisé par le fait,**
**qu'**au moins un régulateur d'entraînement est branché entre le générateur et les moteurs électriques (7) et que le régime du moteur est réglé par l'intermédiaire d'une commande telle que le régime des outils de travail du sol (4) entraînés correspond aux consignes réglées, programmées ou reçues par l'intermédiaire d'un système numérique de détermination de la position, par exemple un récepteur GPS.

6. Appareil de traitement du sol selon la revendication 1,
**caractérisé par le fait,**
**qu'**un dispositif est prévu, qui enregistre la structure du sol traité et que l'intensité de travail des outils de travail du sol (4) entraînés est réglée via la commande de façon à ce que la structure souhaitée du sol et des bandes de lits de semences soit atteinte.

7. Appareil de traitement du sol selon la revendication 1,
**caractérisé par le fait,**
**que** chaque moteur électrique (7) est conçu en tant que servomoteur, moteur synchrone ou moteur asynchrone qui peut être inversé au niveau du sens de rotation et qui est de préférence alimenté avec une tension situé entre 380 Volt et 750 Volt.

8. Appareil de traitement du sol selon la revendication 1,
**caractérisé par le fait,**
**que** chaque moteur électrique (7) est équipé d'une roue libre et/ou d'un dispositif d'inversion, qui sont conçus de façon à pouvoir être activés lorsqu'un couple de serrage limite prescrit ou bien une consommation de courant élevée en conséquence du moteur électrique (7) correspondant ont été atteints.

9. Appareil de traitement du sol selon la revendication 1,
**caractérisé par le fait,**
**qu'**un engrenage réducteur ou un engrenage multiplicateur est prévu entre chaque moteur électrique (7) et l'arbre d'entraînement (6) d'un outil de traitement (4) entraîné.

10. Appareil de traitement du sol selon la revendication 1,
**caractérisé par le fait,**
**que** les différents outils de travail du sol (4) entraînés peuvent être déplacés, décalés ou pivotés sur le cadre (3) à l'aide d'un moteur électrique (7).

11. Appareil de traitement du sol selon la revendication 1,
**caractérisé par le fait,**
**que** les outils de travail du sol (4) entraînés individuellement sont disposés sur le cadre (3) de façon à ce que le sol soit travaillé sur toute sa surface.
